# NEW EUROPEAN PATENT SPECIFICATION

(11) **EP 0 209 205 B2**
(45) Date of publication and mention of the opposition decision: **18.06.1997**
(45) Mention of the grant of the patent: 15.05.1991
(21) Application number: 86201254.9
(22) Date of filing: 17.07.1986
(51) Int. Cl.: A01J 5/04, A01J 5/06, A01J 7/00, A01K 1/12

(54) **An implement for milking animals, such as cows, in a parlour**
Gerät zum Melken von Tieren, wie zum Beispiel Kühen in einem Stall
Dispositif de traite d'animaux, comme par exemple des vaches dans une étable

(30) Priority: 19.07.1985 NL 8502082; 19.07.1985 NL 8502083
(43) Date of publication of application: 21.01.1987
(60) Divisional application: 89116114.3
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- EP-A- 0 091 892
- WO-A-85/02973
- DD-A- 82 592
- DE-A- 2 812 027
- GB-A- 496 767
- GB-A- 918 766
- JP-A-49 138 077
- SU-B- 648 172
- SU-B- 820 747
- SU-B- 935 021
- US-A- 3 874 337
- US-A- 4 010 714
- SOVIET INVENTIONS ILLUSTRATED, week C08, published 02-04-1980, Derwent Publications Ltd.; & SU-A-667 189 (FOMIN LU) 20-06-1979
- IDEM

## Description

The invention relates to a milking implement for animals, such as cows, as described in the preamble of claim 1 (GB-A-918766).

Particularly, when the milking implement comprises means to ensure the attachment of the teat cups to the udder of the animal for an ample period of time, it is desirable to register whether the teat cups are attached properly to the teats of the udder and remain so. The PCT patent application publication nr. WO 85/02973 describes a milking implement with sensors near the top edge of a teat cup in order to have a check whether a teat is engaged correctly. These sensors may give a warning signal if this is not the case and may stop the movement of application of the milking unit to the udder, cause it to move down again and repeat the upwardly engaging movement. Such a milking implement has the disadvantage that, when the teat cups are moved upwardly while the teats of the animal are directed somewhat outwardly, the sensors may indicate that the teats are correctly engaged in spite of the fact that a teat can be bent double when it comes into contact with a teat cup.

The invention has for its object to provide a milking implement as mentioned above, in which the attachment of the teat cups to the teats of an animal's udder is registered in an efficient and reliable manner.

To that end, the milking implement, according to the invention, is characterized in that each teat cup is provided with a sensor for checking, before starting the milking operation, whether the teat is correctly engaged by said teat cup and in that each of said sensors is attached to a respective teat holder at a distance spaced from the upper open end thereof.

Generally, sensors for measuring whether the teat cups are attached to the teats of the udder in a correct way are well known. The US patent specification 4,010,714 shows switching means attached to the top of the teat cups to stop the rising movement of the teat cups when they are brought in contact with the udder of an animal. This does not imply that the teat cups are connected to the teats in a correct way. The GB patent specification 2,007,486 describes a teat cup with the same type of touch or proximity sensors at the upper rim of the teat cup.

In case a sensor spot an incorrect attachment, a control unit is available, according to the invention, for controlling the introduction of a vacuum into the teat cup, so that the attachment is improved on account of the suction operation which results from the vacuum.

In a first embodiment according to the invention, the milking implement is characterized in that around the teat holder a chamber is provided, in which a varying air pressure can be brought via a pulsation hose debouching into said chamber, and the electrical conduits, connecting a senior to the control unit, are guided through said chamber and said pulsation hose.

In a second embodiment according to the invention, the milking implement is characterized in that around the teat holder a chamber is provided which is constituted by a resilient air cushion or equipped with a breather opening to maintain an atmospheric air pressure in said chamber, while a varying air pressure can be brought in the teat holder via a milking hose, and the electrical conduits, connecting a sensor to the control unit, are guided through said chamber and an opening therein.

For a better understanding of the invention and to show how an installation for milking animals may be carried into effect, reference will now be made, by way of example, to the accompanying drawings, in which:
Figure 1 is a schematic plan view of a parlour;
Figure 2 is a lateral view of a milking site with a cow occupying said place, according to the arrows II in Figure 1;
Figure 3 is a partly rear view of a cow in a milkingsite according to the arrow III in Figure 2;
Figure 4 is a further detailed lateral view according to a part of Figure 2;
Figure 5 is a schematic cross-section of a milking cluster connected to an udder;
Figure 6 is a bottom view of the milking cluster according to Figure 5;
Figure 7 shows a second embodiment of a milking cluster;
Figure 8 is a bottom view of the milking cluster according to Figure 7 and
Figure 9 is a cross-section of a teat cup.

In the various figures, which are only schematic renderings, corresponding components carry similar reference numerals.

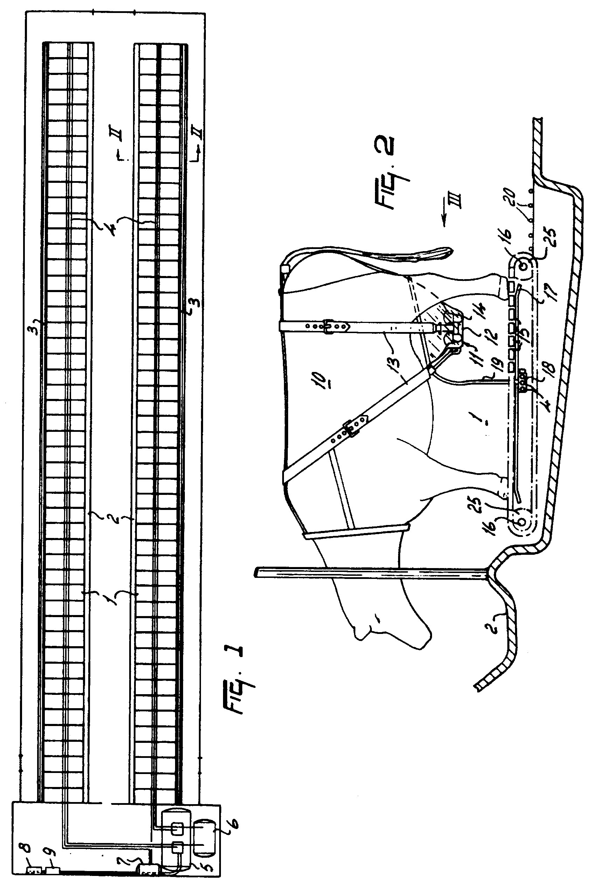

Figure 1 shows a plan view of a parlour which comprises two rows of milking sites 1. The milking sites are provided with a feeding gutter 2 at the front and with a conveyor 3 for discharging manure at the back. In the longitudinal direction of each row of milking sites 1, a set of conduits 4 is arranged underneath the above-mentioned milking sites, said conduits being designed in such a way that an attachment to conduits 4 can be brought about in each milking site. The conduits 4 comprise one or more liquid and/or air pipes. Furthermore, a schematic rendering of a milk tank 5 is given, which also goes for a tank 6 for water, rinsing liquid or cleansing liquid. A tank 7 for compressed air is also rendered. A pump, if at all provided, for bringing about an under-pressure, is not further detailed. The installation may further comprise a computer 8 and control means 9 for an automatic control, check and/or protection of the installation.

Figure 2 shows a cow 10, occupying a milking site. Said cow 10 is provided with a milking cluster 11, which may be permanently connected to the udder of the cow. The milking cluster 11 comprises an envelope 12, made of a transparent synthetic material and attached to the cow by means of straps 13. Contained within the envelope 12 are the teat cups 14, which will be further explained.

The floor of the milking parlour consists of a conveyor with mutually coupled, movable elements 15, linked to one another in the shape of an endless conveyor. The conveyor is provided with two final guiding members 16, about which the elements 15 can move, and with a support 17 to stay the elements 15, constituting the floor of the milking site 1.

The conveyor as described before having been actuated, the elements 15 which constitute the floor of the milking site can move in a rearward direction with regard to the cow, so that the cow is compelled to start walking and defilements, possibly present on the floor, can be discharged in a rearward direction. Near the floor of the milking site a connection box 18 is provided, through which connection box an under-pressure, cleansing or rinsing liquid and/or preheated air can be supplied and milk, and possibly other liquids, discharged. For that purpose the necessary conduits 19 are led from the milking cluster 11 to the connection box 18.

Behind the milking site 1 a grating 20 is rendered, allowing the manure and other defilements, if any, to fall through, then to be transported by discharge means, which are not rendered in Figure 2.

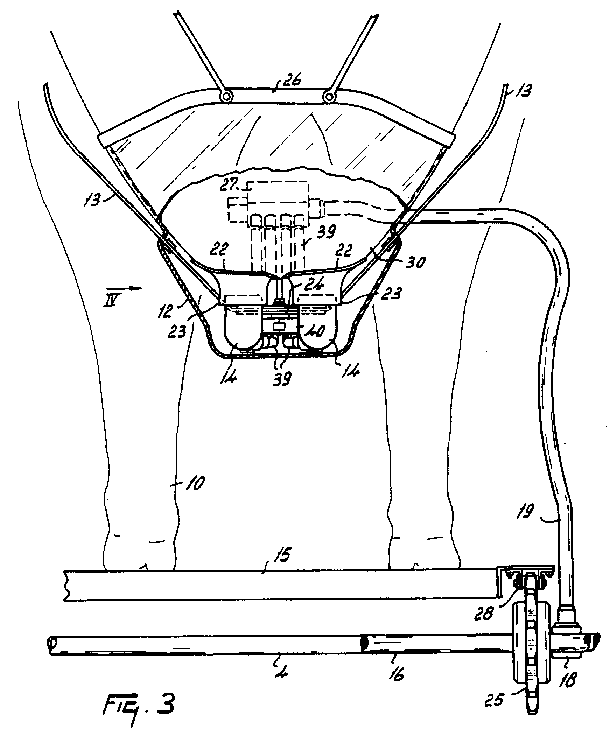

Figure 3 shows a cross-section of the transparent envelope 12, containing four teat cups 14, of which two are visible. The teat cups are provided with a connection, directed forwardly, in view of the necessary conduits. The upper rim 22 of the teat cup is adapted to the shape of the udder, so that a proper attachment to the udder can be obtained. The upper rim 22 is set in the flexible upper part 23 of the teat cup. The straps 13, ensuring the attachment of the milking cluster to the cow, carry both the envelope 12 and a central portion 24, to which the teat cups 14 are connected. Through a flexible conduit 19, containing various pipes, the teat cups are linked with the connection box 18 near the floor of the milking site. The floor of the milking site consists of elements 15, mutually connected and guided around the chain wheels 25, as an endless conveyor. One or more of the chain wheels 25 may be driven by means which are not further defined, such as an electric motor.

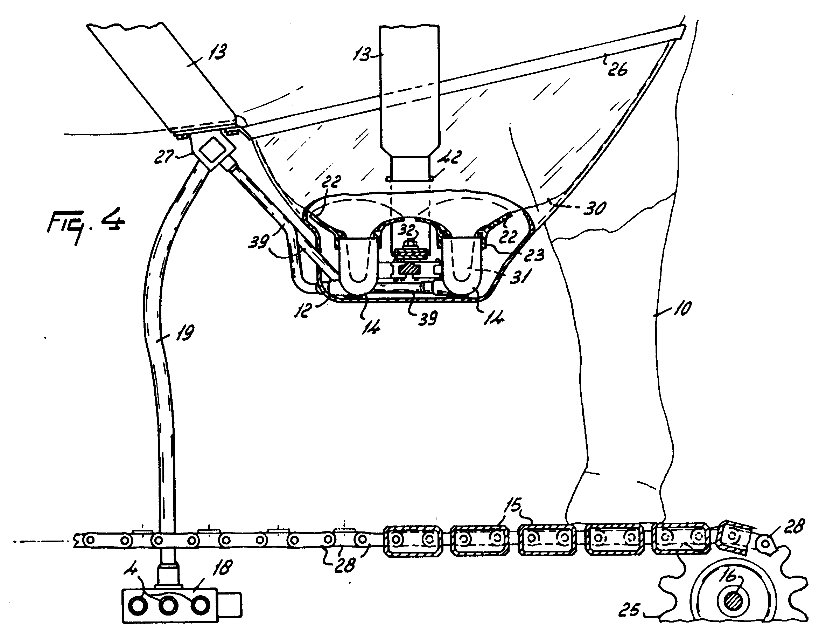

Figure 4 shows, in a way similar to that of Figure 3, the milking cluster in a lateral view. The envelope 12 is provided with a flexible upper rim 26, making it possible to obtain a proper attachment to the udder of the cow. At the front of the envelope 12, a unit 27, attached to one of the straps 13, is rendered. Said unit 27 may comprise a pulsator for achieving a varying air pressure. Furthermore, the unit 27 may comprise the necessary valves and other means for the performance of the milking cluster. A cross-section is given of the elements 15, constituting the floor, said elements consisting of e.g. steel beams with a closed profile and being mutually linked up by means of shackles 28, constituting a chain which engages with the chain wheels 25.

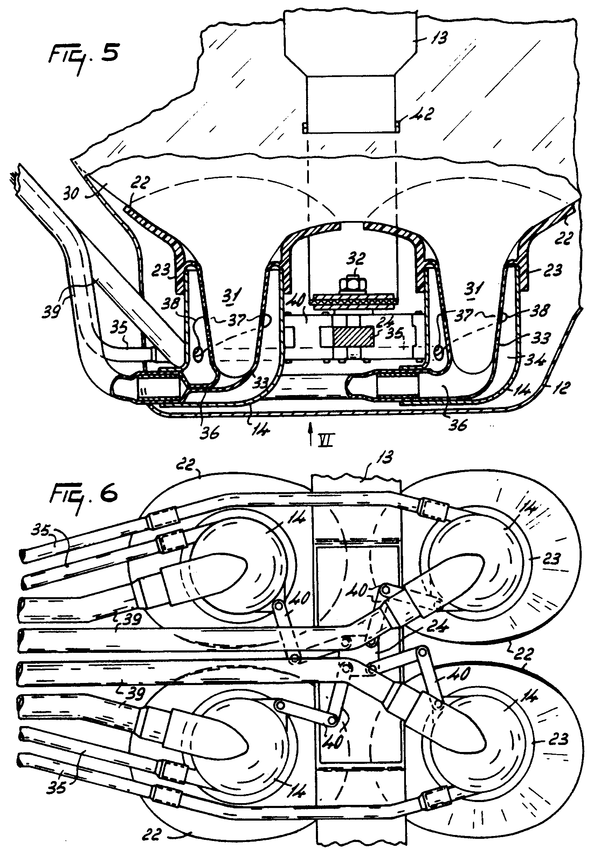

Figure 5 shows in more detail a first embodiment of the milking cluster. It comprises a schematic rendering of the udder 30 with the teats 31 of the cow. The udder 30 is encompassed by the transparent envelope 12 which is attached to the cow by means of a strap 13. Contained within the envelope 12 is a central portion 24, which is also connected to strap 13 by means of a bolt 32. Attached to the central portion 24 are the four teat cups 14, a cross-section of two such cups being provided in Figure 5. The teat cups 14 are provided on the upper side with a flexible top part 23, which may have such a shape that the required attachment to the udder can be obtained. Although the upper part 23 may, because of its flexibility, adapt itself to the shape of the udder, it may be desirable to pre-shape said upper part in such a manner, that a shape is obtained which matches the average size of an udder. In that case the upper part 23 will not have a symmetric shape.

The teat cups 14, rendered in Figure 5, are relatively short, i.e. they have a comparatively small size in height and, accordingly, the teat 31 will extend to the vicinity of the teat cup's lower-most side. Within the teat cup, the teat holder 33 is provided, said holder being integrallyconnected with the flexible upper part 23 and encompassing the teat when the latter is present in the teat cup. Around the teat holder 33 a chamber 34 is provided, in which a varying air pressure can be brought about via a pulsation conduit, so that the chamber 34 is connected with the pulsator which is not rendered in this Figure. The pulsation hose 35 debouches into the chamber 34 through an aperture 36. Provided in the teat holder 33 are sensors 37, which can detect if the teats occupy a correct position in the teat cup. The sensors 37 are connected by means of electrical conduits 38 to a control unit which is not shown in Figure 5. In the given embodiment said electrical conduits are guided through the pulsation hoses 35.

The milk hoses 39, shown in Figure 5, ensure the discharge of milk and are mounted in a lateral position with regard to the teat cups 14 in such a manner that the total height of the teat cup scarcely exceeds the length of the teat 31. Thus, a compact teat cup can be obtained, its height being less than twice the diameter. Generally speaking, an advantage of such a teat cup is that the parts of the milking cluster do not project downwardly farther than necessary, which reduces the risk of the animal kicking the milking cluster down.

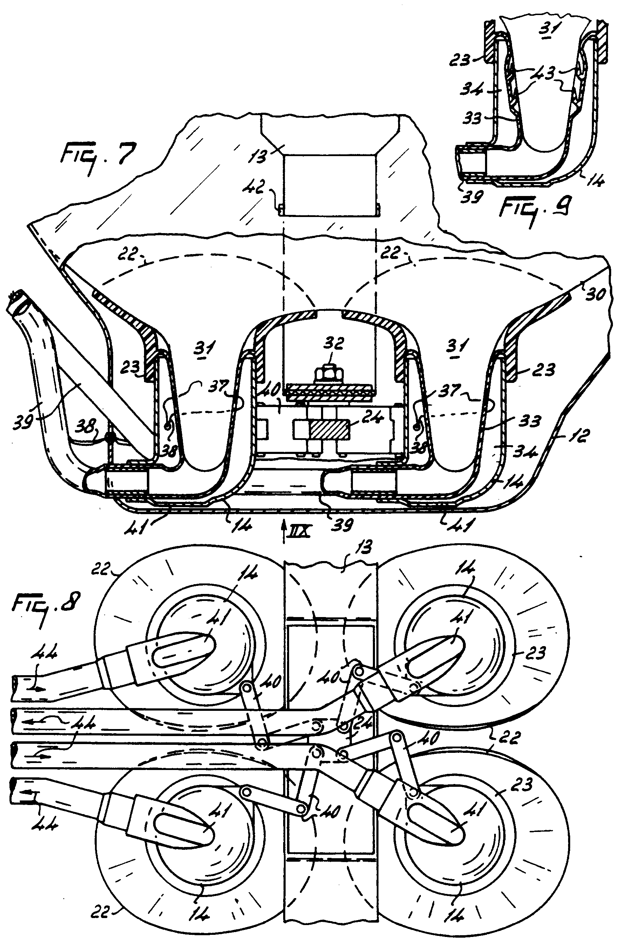

Figure 6 is a schematic bottom view of the milking cluster, shown in Figure 5. Figure 6 renders four milk hoses 39 and four pulsation hoses 35, each of which leads to a teat cup 14. The teat cups 14 are connected, by means of mutually pivotable arms 40, to the central portion that is attached to the strap 13. Accordingly, the teat cups are allowed to move in respect of one another in a substantially level plane, enabled to do so also because the hoses 35 and 39 are sufficiently flexible for that purpose. Therefore, the milking cluster can adapt itself to the position of the teats, which position may vary according to the state or condition of the udder.

Figure 7 shows a second embodiment, without pulsation hoses being provided. In this embodiment, too, the teat holder 33 is provided with sensors 37, which are capable of observing the presence and/or correct position of the teats in the teat cups. In said embodiment, the chamber 34 around the teat holder is not subjected to a varying air pressure, but may constitute a resilient air cushion, respectively be equipped with a breather opening, so that the atmospheric air pressure is maintained in chamber 34. Through the milk hose 39 a varying pressure is brought about, e.g. a varying sequence of under-pressure and atmospheric pressure. When an under-pressure prevails, milk is sucked from the teat, while during the period that there is no under-pressure there is a massage of the teat, at least a stimulation of the blood circulation. In order to prevent that during the exertion of under-pressure the locking hole of the teat is blocked, because it comes to rest against the lower-most side of the teat holder, the teat cup 14 is provided with an embossment device 41 which prevents the teat cup from shutting off the locking hole.

As is evident from Figure 7, the strap 13, to which the central portion 24 is connected by means of a bolt 32 via a slotted hole 42, traverses the transparent envelope 12, so that both said envelope 12 and the milking cluster are supported.

Figure 8 shows a bottom view of the milking cluster according to Figure 7. From said Figure it is clear that the embossment devices 41 at the lower-most sides of the teat cups 14 have a slightly protracted shape. If is preferable that the low and high pressure in the various teat cups should be brought about in such a way, that two teat cups, situated diagonally in respect of one another, are subjected simultaneously to a low, respectively to a high pressure, as indicated by the arrows 44. A certain upward movement of the milking cluster may result from the varied suction, which may have a positive influence on the milking process.

Figure 9 shows a teat cup which is provided with a teat holder 33 with substantially annular, upwardly directed lamellae 43. These lamellae 43 may lean against the teat and prevent air from being sucked on along the teat in those periods when an under-pressure prevails in the milk hose. Air or liquid is allowed to escape along the teat, however, if a sufficient exceed pressure is brought about in the milk hose, e.g. during cleansing or drying of the teat.

The embodiments described are merely examples of the application of any or more characteristics of the invention and, accordingly, the invention should not be considered to be restricted to any embodiment given. In this context it is possible that e.g. the milk hoses 39, shown in the Figures 5 and 7, project downwardly straight from the envelope 12, so that liquid contained by said hoses may flow off in an easier manner.

## Claims

1. A milking implement for animals, such as cows, comprising teat cups (14) which can be attached to the teats (31) of an animal's udder, each of said teat cups (14) being provided with a teat holder (33) encompassing the teat (31) when the latter is present in the teat cup (14); means being provided which are able to keep the teat cups (14) attached to said teats for a period of time substantially longer than the milking operation, characterised in that each teat cup (14) is provided with a sensor for checking, before starting the milking operation, whether the teat is correctly engaged by said teat cup and in that each of said sensors (37) is attached to a respective teat holder (33) at a distance spaced from the upper open end thereof.

2. A milking implement as claimed in claim 1, characterized in that a control unit (8, 9) is available for applying an under pressure into the teat cup when the respective sensor (37) spots an incorrect attachment.

3. A milking implement as claimed in claim 1 or 2, characterized in that around the teat holder (33) a chamber (34) is provided, in which a varying air pressure can be brought via a pulsation hose (35), debouching into said chamber (34), and the electrical conduits (38), connecting a sensor (37) to the control unit (8, 9) are guided through said chamber (34) and said pulsation hose (35).

4. A milking implement as claimed in claim 1 or 2, characterized in that around the teat holder (33) a chamber (34) is provided, which is constituted by a resilient air cushion or equipped with a breather opening to maintain an atmospheric air pressure in said chamber (34), while a varying air pressure can be brought in the teat holder (33) via a milking hose (39), and the electrical conduits (38), connecting a sensor (37) to the control unit (8, 9), are guided through said chamber (34) and an opening therein.

## Patentansprüche

1. Melkvorrichtung für Tiere, wie z. B. Kühe, mit an die Zitzen (31) eines Tiereuters anzuschließenden Melkbechern (14), wobei jeder Melkbecher (14) einen Zitzenhalter (33) aufweist, der die in dem Melkbecher (14) befindliche Zitze (31) umschließt, und wobei Mittel vorgesehen sind, mittels derer die Melkbecher (14) für einen die Dauer des Melkvorganges im wesentlichen überschreitenden Zeitraum an den Zitzen zu halten sind,
dadurch gekennzeichnet, daß jeder Melkbecher (14) einen Sensor aufweist, der vor Beginn des Melkvorganges prüft, ob die Zitze von dem Melkbecher korrekt erfaßt ist, und daß jeder Sensor (37) in einem Abstand vom oberen offenen Ende eines zugehörigen Zitzenhalters (33) an diesem angebracht ist.

2. Melkvorrichtung nach Anspruch 1,
gekennzeichnet durch eine Steuereinheit (8, 9) zum Erzeugen eines Unterdruckes in dem Melkbecher, wenn der zugehörige Sensor (37) einen unsachgemäßen Anschluß des Melkbechers feststellt.

3. Melkvorrichtung nach Anspruch 1 oder 2,
dadurch gekennzeichnet, daß um den Zitzenhalter (33) herum eine Kammer (34) vorgesehen ist, in der über einen in die Kammer (34) mündenden Pulsationsschlauch (35) ein variierender Luftdruck herstellbar ist, und daß die einen Sensor (37) mit der Steuereinheit (8, 9) verbindenden elektrischen Leitungen (38) durch die Kammer (34) und den Pulsationsschlauch (35) geführt sind.

4. Melkvorrichtung nach Anspruch 1 oder 2,
dadurch gekennzeichnet, daß um den Zitzenhalter (33) herum eine Kammer (34) vorgesehen ist, die durch ein federnd nachgiebiges Luftkissen gebildet bzw. mit einer Belüftungsöffnung ausgestattet ist, um in der Kammer (34) einen atmosphärischen Druck aufrechtzuerhalten, während in dem Zitzenhalter (33) ein variierender Luftdruck über einen Melkschlauch (39) herstellbar ist, und daß die einen Sensor (37) mit der Steuereinheit (8, 9) verbindenden elektrischen Leitungen (38) durch die Kammer (34) und eine darin befindliche Öffnung geführt sind.

## Revendications

1. Machine à traire des animaux, tels que des vaches, comprenant des godets de trayon (14) qui peuvent être attachés aux trayons (31) de la mamelle d'un animal, chaque godet de trayon (14) étant muni d'un récipient de trayon (33) entourant le trayon (31) quand ce dernier est présent dans le godet de trayon (14) ; des moyens étant prévus capable de maintenir les godets de trayon (14) attachés auxdits trayons pour une période de temps sensiblement plus longue que l'opération de traite, caractérisée en ce que chaque godet de trayon (14) est muni d'un capteur afin de contrôler, avant de commencer l'opération de traite, que le trayon soit correctement engagé dans ledit godet de trayon, et en ce que chaque capteur (37) est attaché à un récipient de trayon respectif (33) à une distance espacée par rapport à l'extrémité supérieure ouverte de celui-ci.

2. Machine à traire selon la revendication 1, caractérisée en ce qu'une unité de commande (8, 9) est disponible pour commander l'introduction d'un vide dans le godet de trayon quand le capteur correspondant (37) décèle un attachement incorrect.

3. Machine à traire selon la revendication 1 ou 2, caractérisée en ce qu'il est prévu autour du récipient de trayon (33) une chambre (34) dans laquelle peut être apportée une pression d'air variable par l'intermédiaire d'un tuyau souple de pulsation (35) débouchant dans ladite chambre (34), et les conducteurs électriques (38) reliant un capteur (37) à l'unité de commande (8, 9) sont guidés à travers ladite chambre (34) et ledit tuyau souple de pulsation (35).

4. Machine à traire selon la revendication 1 ou 2, caractérisée en ce qu'il est prévu autour du récipient de trayon (33) une chambre (34) qui est constituée d'un coussin d'air élastique ou est équipée d'un évent pour maintenir une pression d'air atmosphérique dans ladite chambre (34), tandis qu'une pression d'air variable peut être apportée dans le récipient de trayon (33) par l'intermédiaire d'un tuyau souple de traite (39), et les conducteurs électriques (38) reliant un capteur (37) à l'unité de commande (8, 9) sont guidés à travers ladite chambre (34) et une ouverture dans celle-ci.
